Europäisches Patentamt

European Patent Office

Office européen des brevets

(11) Veröffentlichungsnummer: **0 480 085 A1**

## EUROPÄISCHE PATENTANMELDUNG

(21) Anmeldenummer: **90119388.8**

(22) Anmeldetag: **10.10.90**

(51) Int. Cl.5: **F42B 3/04**

(43) Veröffentlichungstag der Anmeldung:
**15.04.92 Patentblatt 92/16**

(84) Benannte Vertragsstaaten:
**DE FR GB**

(71) Anmelder: **DORNIER GMBH**
**Postfach 1420**
**W-7990 Friedrichshafen 1(DE)**

(72) Erfinder: **Schäfer, Rudolf, Dipl.-Ing.**
**Mennwanger Strasse 3**
**W-7777 Salem-Altenbeuren(DE)**

(74) Vertreter: **Kasseckert, Rainer**
**DORNIER GMBH Kleeweg 3**
**W-7990 Friedrichshafen 1(DE)**

(54) **Gaserzeuger.**

(57) Gaserzeuger für einen Gasgenerator zum Ausstoßen von Munition oder zum Befüllen von Airbags oder dergleichen, bei dem der gaserzeugende Festtreibstoff (1) mit einer Sprengstoffbeschichtung (3) versehen ist. Der Gaserzeuger enthält einen Kanal (2), in dem sich der Anzündimpuls des Sprengstoffs mit Überschallgeschwindigkeit ausbreiten kann. Dadurch wird der gesamte Festtreibstoff (1) praktisch gleichzeitig über seine gesamte Länge aktiviert.

Fig.1

Die Erfindung betrifft einen Gaserzeuger für einen Gasgenerator zum Ausstossen von Munition oder zum Befüllen von Airbags oder dergleichen.

Aus der DE-PS 34 03 352 ist ein Gasgenerator bekannt, bei dem als Gaserzeuger handelsübliche Sprengschläuche eingesetzt werden. Bedingt durch die bauliche Ausführung dieses Gasgenerators und die einseitige Anzündung des schlauchförmigen Festtreibstoffs ergibt sich bei den Abbrandgeschwindigkeiten normaler Treibstoffe ein ungleichmäßiger, in Längsrichtung des Gaserzeugers verlaufender, einseitiger Druckaufbau (das gaserzeugende Material brennt von einer Seite aus ab).

Die Nachteile herkömmlicher Gasgenerator-Treibsätze liegen hauptsächlich in den Anzündverzugszeiten und damit verbunden in ungleichmäßigem Druckaufbau. Ferner benötigen sie ein kompliziertes Gasführungssystem, wenn man einen gleichmäßigen Druckaufbau erreichen will. Solche Systeme sind dann aufwendig zu realisieren. Es ist auch nicht immer möglich, damit große Massen in wenigen Millisekunden auf die geforderte Geschwindigkeit zu beschleunigen.

Bekannt sind (US 3.590.739) handelsübliche Anzündleitungen, die Fortpflanzungsgeschwindigkeiten bis zu 6000 m/sec unter Verwendung von 500 mg Sprengstoff pro Meter erreichen.

Aufgabe der Erfindung ist es, einen Gaserzeuger für einen Gasgenerator vorzuschlagen, der zu einem gleichmäßigen Druckaufbau führt, und bei dem hohe Gasmengen in kurzer Zeit freigesetzt werden können.

Diese Aufgabe wird erfindungsgemäß gelöst von einem Gaserzeuger mit den Merkmalen des Anspruchs 1. Ausführungen der Erfindung sind Gegenstände von Unteransprüchen.

Kern der Erfindung sind die durchgehende Beschichtung des gaserzeugenden Festtreibstoffs mit einem schnell abbrennenden Sprengstoff (Sekundärsprengstoff) und das Vorsehen von einem oder mehreren Kanälen, in denen der Anzündimpuls sich mit Überschallgeschwindigkeit linear ausbreiten kann. Dadurch wird der gesamte gaserzeugende Festtreibstoff praktisch gleichzeitig aktiviert (Shocktube-Effekt).

Sekundärsprengstoff - von secondary explosive, bezeichnet Explosivstoffe, die zur Einleitung der Detonation den Detonationsstoß eines Initialsprengstoffes benötigen. Diese Stoffe sind deshalb relativ unempfindlich gegen äußere Einflüsse (Schlag, Stoß, Hitze).
Solche Stoffe sind nicht auf Flammzündung, sondern auf Zündung durch Stoßwellen ausgelegt.

Shocktube-Effekt bezeichnet folgenden Mechanismus: Im Innenraum von Rohren, deren Innenwandung mit einer dünnen Sprengstoffbeschichtung versehen ist, pflanzt sich die durch Detonation dieser Schicht entstehende Druckwelle mit recht konstanter Geschwindigkeit entlang der Röhre fort. Die Röhre bleibt erhalten; wird nicht zerstört. Auf diese Weise lassen sich Verzögerungsleitungen und Zündketten realisieren.

Die Stoßwelle des Anzündimpulses durcheilt den Anzündkanal mit Überschallgeschwindigkeit und sorgt daher für nahezu gleichzeitige Anzündung über die Länge des Festtreibstoffschlauches. Damit ist ein gleichmäßiger Druckaufbau sichergestellt. Nach dem Anzünden brennt der Festtreibstoff mit seiner wesentlich niedrigeren Abbrandgeschwindigkeit und liefert die gewünschte Gasmenge. So sind erfindungsgemäß die Funktionen Anzünden und Abbrand voneinander getrennt. Während die Anzündgeschwindigkeit größer 1000 m/sec ist, liegt die Abbrandgeschwindigkeit des gaserzeugenden Treibstoffs um mehrere Größenordnungen niedriger, z.B. im Bereich einiger Meter pro Sekunde.

Der vorgeschlagene Gaserzeuger kommt aufgrund seines Aufbaus mit einer sehr geringen Sprengstoffmenge, z.B. von bis 50 mg/m, aus und ist damit wesentlich weniger gefährlich. Der gaserzeugende Komposittreibsatz enthält keine Sprengstoffe, sondern relativ unempfindliche pyrotechnische Komponenten wie z.B.
- Metallpulver/Perchlorat,
- Nitrat/Binder/Perchlorat, oder
- Binder/Perchlorat.

In einer Ausführungsform hat der Festtreibstoff die Form eines Hohlzylinders. In seinem Inneren ist die Sprengstoffbeschichtung aufgebracht. Der Kern, der den Kanal bildet, ist in diesem Fall zylinderförmig.

In einer anderen Ausführungsform kann eine Hülle vorgesehen sein, die zusammen mit dem strangförmigen Festtreibstoff einen oder mehrere Gaskanäle bildet, in denen sich der Anzündimpuls rasch ausbreiten kann. Die Hülle platzt dann - beim Abbrand des Festtreibstoffs - auf oder brennt, wenn sie aus geeignetem Material ist, mit und erzeugt zusätzlich Gas.

Der erfindungsgemäße Gaserzeuger kann biegsam ausgeführt sein, dies kann z.B. durch die Verwendung eines Elastomerbinders erreicht werden.

Der erfindungsgemäße Gaserzeuger kann ohne Hülle oder mit - bei der Gaserzeugung aufplatzender - Hülle ausgeführt sein. Sie kann aus folgenden Materialien bestehen:
Polyvinyl,
Polyäthylen,
Polypropylen.

Es kann ein homogener Komposittreibstoff verwendet werden, der für die Gaserzeugung ausgelegt ist.

Um einen besonders gleichmäßigen Abbrand zu erreichen, können die mechanischen Toleranzen (beim Extrusionsprozess) in engen Grenzen eingehalten werden. Durch Verwendung des Extrusionsprozesses lassen sich, verglichen mit anderen Fertigungsmethoden, leicht enge Toleranzen einhalten (mechanische Abmessungen, Ladungsgewicht/m usw.).

Die Erfindung wird anhand zweier Figuren näher erläutert.

Beide Figuren zeigen Querschnitte durch erfindungsgemäße Gaserzeuger.

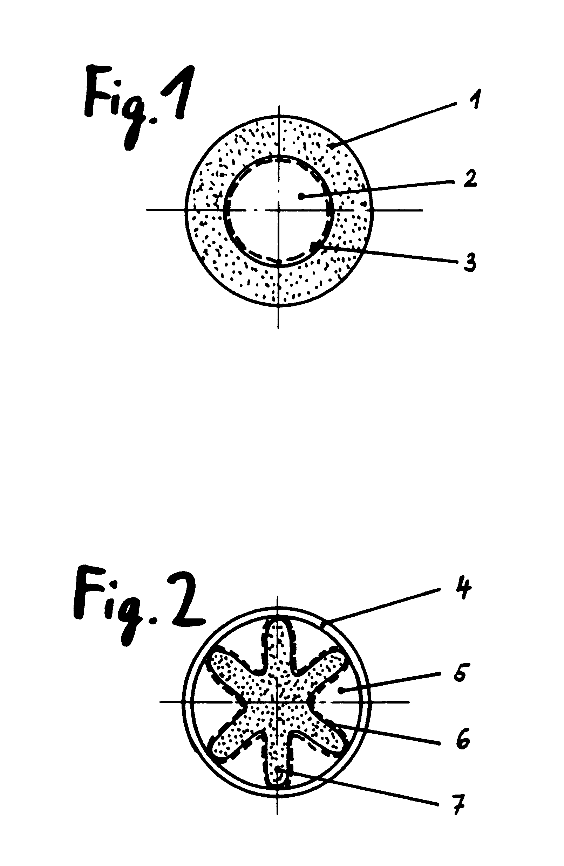

Fig. 1 zeigt den hohlzylinderförmigen Festtreibstoff **1**, an dessen Innenseite sich die Sprengstoffbeschichtung **3** befindet. Im Inneren des Hohlzylinders liegt der Kanal **2**.

Wenn Gas erzeugt werden soll, wird die Sprengstoffbeschichtung **3** an einer Seite des Gaserzeugers angezündet. Der Sprengstoff brennt mit hoher Geschwindigkeit ab. Dadurch breitet sich seine Stoßwelle mit hoher Geschwindigkeit linear durch den gesamten Kanal des Gaserzeugers aus und zündet gleichmäßig den Festtreibstoff **1**, der dann von innen nach außen gleichmäßig und mit seiner wesentlich langsameren Brenngeschwindigkeit abbrennt.

Fig. 2 zeigt eine weitere Ausführung eines erfindungsgemäßen Gaserzeugers. Der Festtreibstoff **7** ist hier in Form eines Stranges gepreßt und von der Hülle 4 umgeben. Die Hülle **4** und der Festtreibstoff **7** bilden mehrere Kanäle **5**, in denen sich die Anzündstoßwelle längs ausbreiten kann. Die Sprengstoffbeschichtung **6** ist auf der Außenseite des Festtreibstoffs **7** aufgebracht. Die Hülle **4** besteht bevorzugt aus Polyvinyl, Polyäthylen oder Polypropylen und kann beim Anzünden aufplatzen oder mit verbrennen und Gas erzeugen.

**Patentansprüche**

1.  Gaserzeuger für einen Gasgenerator zum Ausstoßen von Munition oder zum Befüllen von Airbags oder dergleichen, mit
    -   einem langsam abbrennenden Festtreibstoff (**1, 7**) in Schlauchform oder in Strangform,
    -   einer oder mehreren mit hoher Ge-schwindigkeit abbrennenden, durchge-henden Sprengstoffbeschichtungen (Sekundärsprengstoff **3, 6**), die an einer Längsseite des Festtreibstoffs (**1, 7**) anliegen und
    -   einem oder mehreren langgezogenen Gaskanälen (**2, 5**).

2.  Gaserzeuger nach Anspruch 1, **dadurch gekennzeichnet**, daß der Gaskanal (**2**) innerhalb des Festtreibstoffs (**1**) liegt und Zylinderform hat.

3.  Gaserzeuger nach Anspruch 1, **gekennzeichnet durch** eine Hülle (**4**), die zusammen mit dem Festtreibstoff (**7**) den oder die Gaskanäle (**5**) bildet.

**Fig.1**

**Fig.2**

Europäisches
Patentamt

**EUROPÄISCHER
RECHERCHENBERICHT**

Nummer der Anmeldung

**EP 90 11 9388**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-807 499 (DU PONT DE NEMOURS)<br>* Seite 1, Zeile 33 - Seite 2, Zeile 21; Seite 2, Zeile 57 - Seite 3, Zeile 4; Figuren *<br>– – – | 1-3 | F 42 B 3/04 |
| X | FR-A-2 623 796 (SOCIETE NATIONALE DES POUDRES ET EXPLOSIFS)<br>* Seite 1, Zeilen 5-13; Seite 1, Zeile 22 - Seite 2, Zeile 18; Seite 3, Zeile 19 - Seite 4, Zeile 17; Seite 8, Zeile 4 - Seite 9, Zeile 9; Ansprüche 1,6,9; Figuren 3,4 *<br>– – – | 1,2 | |
| Y | US-A-4 200 615 (HAMILTON et al.)<br>* Spalte 1, Zeilen 29-41; Spalte 2, Zeilen 40-66; Spalte 3, Zeilen 17-26; Spalte 3, Zeile 66 - Spalte 4, Zeile 7; Ansprüche 1,4; Figuren *<br>– – – | 1-3 | |
| Y | FR-A-1 118 847 (IMPERIAL CHEMICAL INDUSTRIES)<br>* Seite 1, rechte Spalte, Absatz 5 - Seite 2, linke Spalte, Absatz 2; Seite 7, linke Spalte, Absatz 2 - rechte Spalte, Absatz 2; Ansprüche A,1,2; Figuren *<br>– – – | 1-3 | |
| A | FR-A-2 316 101 (EATON CORP.)<br>* Seite 5, Zeilen 7-27; Anspruch 1; Figuren *<br>– – – – – | 1,2 | **RECHERCHIERTE SACHGEBIETE (Int. Cl.5)**<br><br>F 42 B<br>F 42 C |

Der vorliegende Recherchenbericht wurde für alle Patentansprüche erstellt

| Recherchenort | Abschlußdatum der Recherche | Prüfer |
|---|---|---|
| Den Haag | 03 Juni 91 | DOUSKAS K. |